# EUROPÄISCHE PATENTSCHRIFT

(11) **EP 0 921 211 B1**
(45) Veröffentlichungstag und Bekanntmachung des Hinweises auf die Patenterteilung: **01.08.2001**
(21) Anmeldenummer: 98122448.8
(22) Anmeldetag: 26.11.1998
(51) Int. Cl.: C23C 28/02, F16C 33/12, C25D 7/10, C25D 3/60

(54) **Schichtverbundwerkstoff für Gleitlanger mit bleifreier Gleitschicht**
Multilayered composite material for bearing having a support layer
Matériau composite multicouche pour palier ayant une couche de support

(30) Priorität: 06.12.1997 DE 19754221
(43) Veröffentlichungstag der Anmeldung: 09.06.1999
(73) Patentinhaber: Federal-Mogul Wiesbaden GmbH & Co.KG, 65201 Wiesbaden (DE)
(72) Erfinder: Huhn, Hans-Ulrich, 65388 Schlangenbad-Wambach (DE); Wiebach, Dietmar, 65189 Wiesbaden (DE); Gruenthaler, Karl-Heinz Dr., 61250 Usingen (DE); Spahn, Peter Dr., 64367 Mühltal (DE)
(74) Vertreter: Fuchs Mehler Weiss & Fritzsche

(56) Entgegenhaltungen:
- EP-A- 0 254 355
- DE-A- 4 328 921
- DE-A- 4 442 186
- US-A- 4 140 835
- US-A- 5 512 242

## Beschreibung

Die Erfindung betrifft einen Schichtverbundwerkstoff für Gleitlager mit einer Trägerschicht, einer Lagermetallschicht aus einer Kupferlegierung mit einem Kupferanteil von 50 bis 95 Gew.-% oder einer Aluminiumlegierung mit einem Aluminiumanteil von 60 bis 95 Gew.-%, einer Diffusionssperrschicht und einer galvanisch aufgebrachten Gleitschicht aus einer bleifreien, Zinn und Kupfer aufweisenden Legierung.

Schichtverbundwerkstoffe mit dem Aufbau Stahlrücken/Bleibronze/Gleitschicht aus Blei-Zinn-Kupfer haben sich durch hohe Zuverlässigkeit und mechanische Belastbarkeit bewährt. Solche Schichtverbundwerkstoffe werden beispielsweise in Glyco Ingenieurberichte 1/91 beschrieben.

Ein typischer Vertreter dieser Werkstoffgruppen hat folgenden Aufbau:
Stahl
CuPb22Sn Lagermetall
Nickel-Damm
PbSn10Cu2 Gleitschicht.

Insbesondere die galvanische Gleitschicht ist ein multifunktionaler Werkstoff, die unter anderem folgende Aufgaben übernimmt:
- Einbettfähigkeit für Fremdpartikel
- Einlauf bzw. Anpassung der Gleitpartner
- Korrosionsschutz für die Bleibronze
- Notlaufeigenschaften im Fall von Ölmangel.

Das Lagermetall beinhaltet ebenfalls gewisse Notlaufreserven für den Fall, daß die Gleitschicht völlig abgetragen ist.

Diese seit Jahrzehnten bewährten Lagerkonzepte beinhalten aber heute noch Bleianteile hauptsächlich in der Gleitschicht. Dies ist aus Gründen der Umweltrelevanz von Schwermetallen unbefriedigend.

Die galvanische Abscheidung der ternären Gleitschicht erfolgte bisher hauptsächlich mit fluoroborathaltigen Bädern. Die Kupferabscheidung konnte in diesen Bädern nur bis zu 2 Gew.-% durchgeführt werden, während in zyanidischen Bädern Abscheideraten des Kupfers von bis zu 20 Gew.-% erreicht werden konnten. Hier hat sich allerdings herausgestellt, daß die Schicht äußerst spröde ist und insofern keine große Haltbarkeit aufweist.

Aus der DE-OS 27 22 144 ist die Verwendung einer Legierung mit mehr als 6 bis 10 Gew.-% Kupfer, 10 bis 20 Gew.-% Zinn, Rest Blei als Weichmetalllagerlegierung für Mehrschichtgleitlager bekannt. Diese Legierung kann unter anderem durch galvanische Abscheidung aufgebracht werden, wobei eine Nickel-Zwischenschicht als Diffusionssperre vorgesehen ist. Diese bekannte Legierung, die mit herkömmlichen Elektrolytbädern hergestellt wird, zeigt jedoch eine grobe Verteilung des Zinns.

In der DE-PS 195 45 427.8 werden zur Herstellung von Laufschichten aus Blei-Zinn-Kupfer fluoroboratfreie Galvanisierbäder beschrieben, die ein Carbonsäure aufweisendes Kornverfeinerungsmittel und ein Fettsäureglykolester enthalten. Es wird dadurch eine feinkristalline Abscheidung des Zinns in vollständig homogener Verteilung erzielt, wobei eine Kupferabscheidung von 2 bis 16 Gew.-% erzielt wird.

In der älteren deutschen Anmeldung DE 196 22 166 werden Ternärschichten mit Hartteilchen beschrieben, wobei für die Laufschicht fluoroboratfreie Galvanisierbäder unter Einsatz von Alkylsulfonsäure verwendet werden, um eine vollständig homogene Verteilung der Hartteilchen im Matrixmaterial zu erhalten. Neben bleihaltigen Gleitschichten werden mittels dieser alkylsulfonsauren Bäder auch bleifreie Schichten aus SnCuNi, Sn, SnCu und CuSn aufgebracht. Es hat sich jedoch gezeigt, daß mit diesen bleifreien Schichten zwar Kupfergehalte bis zu 16 Gew.-% erreicht werden können, diese Schichten zeigen jedoch noch keine zufriedenstellenden Eigenschaften hinsichtlich mechanischer Belastbarkeit und Dauerfestigkeit.

Untersuchungen mit fluoroboratfreien Bädern haben gezeigt, daß auch Kupfergehalte von bis zu 30 Gew.-% in der Gleitschicht möglich sind. Die Abscheidung ist stabil und prozeßsicher. Ein weiterer Vorteil ergab sich dadurch, daß keine Kupferabscheidung auf dem Stahlrücken des Lagers erfolgt.

Die Härte der binären Legierung SnCu mit 30 Gew.-% Kupfer, Rest Zinn liegt bei ≥ 100 HV. Langzeitauslagerungen bei erhöhter Temperatur (170°C-2000h) ergaben Hinweise auf eine Diffusionsneigung der Gleitschichtelemente zum Nickel-Diffusionssperrschicht. Dies kann zu einer Versprödung und damit zur Beeinträchtigung der Bindung Gleitschicht/Diffusionssperrschicht bzw. Lagermetall/Diffusionssperrschicht führen.

Der Vorteil der durch den Kupfergehalt erzielbaren höheren Härte der Gleitschicht konnte daher bisher nicht vollständig genutzt werden.

Es ist daher Aufgabe der Erfindung, einen Schichtverbundwerkstoff zu schaffen, dessen galvanisch aufgebrachte Gleitschicht unabhängig vom Kupfergehalt auch bei höheren Temperaturen keine Versprödung zeigt.

Diese Aufgabe wird dadurch gelöst, daß die Gleitschicht 8-30 Gew.-% Kupfer, 60-91,5 Gew.-% Zinn und 0,5-10 Gew.-% Kobalt aufweist.

Es hat sich überraschend herausgestellt, daß durch Zulegieren von Kobalt die Gleitschicht bzw. der Schichtaufbau insgesamt stabilisiert werden kann, ohne daß die Härte der Gleitschicht abnimmt. Gleichzeitig erhöht Kobalt die mechanische Belastbarkeit (Verschleiß und Ermüdungsfestigkeit) der Gleitschicht durch Legierungsbildung mit Zinn und Kupfer bzw. Aluminium und Kupfer. Außerdem wird die thermische Stabilität gesteigert. Zur Erzielung dieser vorteilhaften Effekte haben sich Kobaltanteile bis zu 10 Gew.-% als ausreichend erwiesen,

Vorzugsweise geht ein höherer Zinngehalt mit einem höheren Kobaltgehalt einher, weil sich gezeigt hat, daß sich die Zinnbewegung vorteilhaft durch den Kobaltanteil aufgrund einer möglichen Kristallbildung vermindert läßt, wodurch die Versprödung aufgehalten wird. Dieser Zusammenhang geht aus den beispielhaften Zusammensetzungen von Gleitschichten hervor, die in der nachfolgenden Tabelle 1 zusammengestellt sind.

**Tabelle 1**

| Kupfer Gew.-% | Zinn Gew.-% | Kobalt Gew.-% |
|---|---|---|
| 30 | 69,5 | 0,5 |
| 25 | 73 | 2 |
| 20 | 76 | 4 |
| 15 | 79 | 6 |
| 10 | 82 | 8 |
| 8 | 82 | 10 |

Die Gleitschicht kann zusätzlich Wismut und/oder Silber und/oder Nickel mit einem Anteil von bis zu maximal 20 Gew.-% enthalten. Die Gleitschicht kann ferner Hartteilchen aufweisen, wobei Al₂O₃, Si₃N₄, Diamant, TiO₂ oder SiC in Frage kommen. Diese Hartteilchen können allein oder in Kombination in der Gleitschicht enthalten sein. Die Diffusionssperrschicht kann aus Nickel, Nickel-Zinn, Kupfer-Nickel, Kobalt oder Kobalt-Nickel bestehen.

Vorzugsweise umfaßt die Diffusionssperrschicht eine 1 bis 3 *µ*m dicke Nickelschicht und eine darauf abgeschiedene 2 bis 10 *µ*m dicke Nickel-Zinn-Schicht. Eine weitere Variante stellt die Diffusionssperrschicht aus Kobalt dar, die ebenfalls eine Dicke von 1 bis 3 *µ*m aufweisen kann. Bei einer Kobalt-Nickel-Schicht werden ebenfalls Dicken von 1 bis 3 *µ*m bevorzugt.

Die kobalthaltige Gleitschicht kann galvanisch auf Lagermetallschichten aus Kupfer-Aluminium. Kupfer-Zinn, Kupfer-Blei, Kupfer-Zink, Kupfer-Zink-Silizium. Kupfer-Zink-Aluminium oder Kupfer-Aluminium-Eisen oder Aluminium-Zinn. Aluminium-Zinn-Silizium, Aluminium-Zink aufgebracht werden. Bevorzugte Legierungszusammensetzung der Lagermetallschicht sind:
CuPb22Sn, CuAl8, CuSn6, AlSn6CuNi, AlSn20Cu, AlSn10Ni2MnCu, AlSn15Si3Cu.

Vorzugsweise ist auch die Lagermetallschicht bleifrei, so daß insgesamt ein bleifreier Schichtverbundwerkstoff für Gleitlager geschaffen wird.

Die Dicke der Gleitschicht liegt vorteilhafterweise bei 8 bis 12 *µ*m.

In der nachfolgenden Tabelle 2 sind die Härtewerte einiger Schichtverbundwerkstoffe für unterschiedliche Legierungszusammensetzungen von Lagermetall und Gleitschicht angegeben.

**Tabelle 2**

| Nr. | Lagermetall | Diffusionssperrschicht | Gleitschicht | Härte HV 1/5/30 |
|---|---|---|---|---|
| 1 | CuPb22Sn | Ni / SnNi | SnCu12 | 80 |
| 2 | CuPb22Sn | Co | SnCu26 | 150 |
| 3 | CuPb22Sn | Ni / SnNi | SnCu12Co3 | 90 |
| 4 | CuAl8 | CuNi | SnCu12Co8 | 100 |
| 5 | CuAl8 | Ni / SnNi | SnCu12Co8 | 100 |
| 6 | AlSn20Cu | Ni / SnNi | SnCu12Co3 | 90 |
| 7 | CuPb22Sn | Co | SnCu26Co2 | 150 |

Im ersten Beispiel besteht die Gleitschicht aus Zinn-Kupfer mit einem Kupferanteil von 12 Gew.-%. Die Gleitschicht ist galvanisch auf eine Diffusionssperrschicht aufgebracht, die aus einer Nickel- und aus einer Zinn-Nickel-Schicht besteht. Das Lagermetall ist in diesem Beispiel CuPb22Sn. Die Härte der Gleitschicht liegt bei 80 HV.

Das Beispiel 2 unterscheidet sich von Beispiel 1 dadurch, daß der Kupfergehalt bei 26 Gew.-% liegt. Es wird hier zwar eine Härte von 150 HV erreicht, allerdings hat sich gezeigt, daß diese Gleitschicht bei höheren Temperaturen nicht die nötige Stabilität aufweist und versprödet, obwohl durch die Kobalt-Sperrschicht bereits eine deutliche Verbesserung eingetreten ist. Es konnte gezeigt werden, daß durch die Zugabe von Kobalt im Beispiel 3 die Härte geringfügig auf 90 HV ansteigt, wobei die Schicht stabiler ist als die des Beispiels 1.

Die Beispiele 3, 4, 5 und 6 betreffen Ausführungsformen mit unterschiedlichen Diffusionssperrschichten und unterschiedlichen Lagermetallen. Das Beispiel 7 zeigt, daß bereits durch die geringe Zugabe von 2 Gew.-% Kobalt die ansonsten instabile SnCu26 Legierung stabil gemacht werden kann, wobei die Härte bei 150 HV erhalten geblieben ist.

## Patentansprüche

1. Schichtverbundwerkstoff für Gleitlager mit einer Trägerschicht, einer Lagermetallschicht aus einer Kupferlegierung mit einem Kupferanteil von 50-95 Gew.-% oder eine Aluminium-Legierung mit einem Aluminiumanteil von 60-95 Gew.-%, einer Diffusionssperrschicht und einer galvanisch aufgebrachten Gleitschicht aus einer bleifreien, Zinn und Kupfer aufweisenden Legierung, **dadurch gekennzeichnet,**
daß die Gleitschicht-Legierung 8-30 Gew.-% Kupfer, 60-91,5 Gew.-% Zinn und 0,5-10 Gew.-% Kobalt aufweist.

2. Schichtverbundwerkstoff nach Anspruch 1, **dadurch gekennzeichnet,** daß ein höherer Zinngehalt mit einem höheren Kobaltgehalt einhergeht.

3. Schichtverbundwerkstoff nach einem der Ansprüche 1 oder 2, **dadurch gekennzeichnet,** daß die Gleitschicht Wismut und/oder Silber und/oder Nickel mit einem Anteil von max. 20 Gew.-% enthält.

4. Schichtverbundwerkstoff nach einem der Ansprüche 1 bis 3, **dadurch gekennzeichnet,** daß die Gleitschicht als Hartteilchen Al₂O₃ und/oder Si₃N₄ und/oder Diamant und/oder TiO₂ und/oder SiC aufweist.

5. Schichtverbundwerkstoff nach einem der Ansprüche 1 bis 4, **dadurch gekennzeichnet,** daß die Diffusionssperrschicht Nickel aufweist.

6. Schichtverbundwerkstoff nach Anspruch 5, **dadurch gekennzeichnet,** daß die Diffusionssperrschicht aus einer 1 bis 3 *µ*m dicken Nickelschicht und einer darauf abgeschiedenen 2 bis 10 *µ*m dicken Nickel-Zinn-Schicht besteht.

7. Schichtverbundwerkstoff nach Anspruch 5, **dadurch gekennzeichnet,** daß die Diffusionssperrschicht aus Kupfer-Nickel besteht.

8. Schichtverbundwerkstoff nach einem der Ansprüche 1 bis 4, **dadurch gekennzeichnet,** daß die Diffusionssperrschicht aus einer 1 bis 3 *µ*m dicken Kobaltschicht besteht.

9. Schichtverbundwerkstoff nach einem der Ansprüche 1 bis 4, **dadurch gekennzeichnet,** daß die Diffusionssperrschicht aus einer 1 bis 3 *µ*m dicken Kobalt-Nickelschicht besteht.

10. Schichtverbundwerkstoff nach einem der Ansprüche 1 bis 9, **dadurch gekennzeichnet,** daß die Lagermetallschicht aus einer Kupfer-Aluminium-, Kupfer-Zinn-, Kupfer-Blei-, Kupfer-Zink-, Kupfer-Zink-Silizium-, Kupfer-Zink-Aluminium-, Kupfer-Aluminium-Eisen-, Aluminium-Zinn-, Aluminium-Zinn-Silizium-, oder Aluminium-Zink-Legierung besteht.

11. Schichtverbundwerkstoff nach Anspruch 10, **dadurch gekennzeichnet,** daß die Lagermetallschicht bleifrei ist.

## Claims

1. A laminate composite material for plain bearings comprising a carrier layer, a bearing metal layer comprising a copper alloy with a proportion of copper of 50-95% by weight or an aluminium alloy with a proportion of aluminium of 60-95% by weight, a diffusion barrier layer, and a galvanically applied plain bearing layer comprising a lead-free alloy having tin and copper, characterised in that the plain bearing layer alloy has 8-30% by weight of copper, 60-91.5% by weight of tin and 0.5-10% by weight of cobalt.

2. A laminate composite material according to. claim 1 characterised in that a higher tin content entails a higher cobalt content.

3. A laminate composite material according to one of claims 1 and 2 characterised in that the plain bearing layer contains bismuth and/or silver and/or nickel in a proportion of a maximum of 20% by weight.

4. A laminate composite material according to one of claims 1 to 3 characterised in that the plain bearing material has Al₂O₃ and/or Si₃N₄ and/or diamond and/or TiO₂ and/or SiC as hard particles.

5. A laminate composite material according to one of claims 1 to 4 characterised in that the diffusion barrier layer has nickel.

6. A laminate composite material according to claim 5 characterised in that the diffusion barrier layer comprises a 1 to 3 µm thick nickel layer and a 2 to 10 µm thick nickel-tin layer deposited thereon.

7. A laminate composite material according to claim 5 characterised in that the diffusion barrier layer comprises copper-nickel.

8. A laminate composite material according to one of claims 1 to 4 characterised in that the diffusion barrier layer comprises a 1 to 3 µm thick cobalt layer.

9. A laminate composite material according to one of claims 1 to 4 characterised in that the diffusion barrier layer comprises a 1 to 3 µm thick cobalt-nickel layer.

10. A laminate composite material according to one of claims 1 to 9 characterised in that the bearing metal layer comprises a copper-aluminium, copper-tin, copper-lead, copper-zinc, copper-zinc-silicon, copper-zinc-aluminium, copper-aluminium-iron, aluminium-tin, aluminium-tin-silicon or aluminium-zinc alloy.

11. A laminate composite material according to claim 10 characterised in that the bearing metal layer is lead-free.

## Revendications

1. Matériau composite multicouche pour palier lisse, présentant une couche de support, une couche antifriction composée d'un alliage de cuivre présentant une teneur en cuivre comprise entre 50 et 95 % en masse ou d'un alliage d'aluminium présentant une teneur en aluminium comprise entre 60 et 95 % en masse, une couche d'arrêt de la diffusion et une couche de glissement appliquée par dépôt électrolytique et composée d'un alliage exempt de plomb présentant de l'étain et du cuivre, caractérisé en ce que
l'alliage de la couche de glissement présente 8 à 30 % en masse de cuivre, 60 à 91,5 % en masse d'étain et 0,5 à 10 % en masse de cobalt.

2. Matériau composite multicouche selon la revendication 1, caractérisé en ce qu'une teneur en étain plus élevée s'accompagne d'une teneur en cobalt plus importante.

3. Matériau composite multicouche selon la revendication 1 ou 2, caractérisé en ce que la couche de glissement contient du bismuth et/ou de' l'argent et/ou du nickel, avec une fraction de 20 % en masse au maximum.

4. Matériau composite multicouche selon l'une des revendications 1 à 3, caractérisé en ce que la couche de glissement présente en tant que particules dures Al₂O₃ et/ou Si₃N₄ et/ou du diamant et/ou TiO₂ et/ou SiC.

5. Matériau composite multicouche selon l'une des revendications 1 à 4, caractérisé en ce que la couche d'arrêt de la diffusion présente du nickel.

6. Matériau composite multicouche selon la revendication 5, caractérisé en ce que la couche d'arrêt de la diffusion se compose d'une couche de nickel de 1 à 3 µm d'épaisseur et d'une couche de nickel - étain appliquée dessus et présentant une épaisseur comprise entre 2 et 10 µm.

7. Matériau composite multicouche selon la revendication 5, caractérisé en ce que la couche d'arrêt de la diffusion se compose de cuivre - nickel.

8. Matériau composite multicouche selon l'une des revendications 1 à 4, caractérisé en ce que la couche d'arrêt de la diffusion se compose d'une couche de cobalt de 1 à 3 *µ*m d'épaisseur.

9. Matériau composite multicouche selon l'une des revendications 1 à 4, caractérisé en ce que la couche d'arrêt de la diffusion se compose d'une couche de cobalt - nickel de 1 à 3 µm d'épaisseur.

10. Matériau composite multicouche selon l'une des revendications 1 à 9, caractérisé en ce que la couche antifriction se compose d'un alliage de cuivre - aluminium, cuivre - étain, cuivre - plomb, cuivre - zinc, cuivre - zinc - silicium, cuivré - zinc - aluminium, cuivre-aluminium - fer, aluminium - étain, aluminium - étain - silicium ou aluminium - zinc.

11. Matériau composite multicouche selon la revendication 10, caractérisé en ce que la couche antifriction est exempte de plomb.
